# FASCICULE DE BREVET EUROPEEN

(11) **EP 2 222 616 B1**
(45) Date de publication et mention de la délivrance du brevet: **12.09.2018**
(21) Numéro de dépôt: 08868231.5
(22) Date de dépôt: 11.12.2008
(51) Int. Cl.: C04B 35/101, C04B 35/565, C04B 35/622, C04B 35/599

(54) **PRODUIT REFRACTAIRE A MATRICE DE SIALON DOPE**
FEUERFESTES PRODUKT MIT EINER SIALON-DOTIERTEN MATRIX
REFRACTORY PRODUCT HAVING A DOPED SIALON MATRIX

(30) Priorité: 11.12.2007 FR 0759747
(43) Date de publication de la demande: 01.09.2010
(73) Titulaire: Saint-Gobain Centre de Recherches et d'Etudes Européen, 92400 Courbevoie (FR)
(72) Inventeur: ROULET, Frédéric, F-13300 Salon de Provence (FR); JORGE, Eric, F-84210 Les Valayans (FR)
(74) Mandataire: Nony
(86) Numéro de dépôt international: PCT/FR2008/052272
(87) Numéro de publication internationale: WO 2009/083678

(56) Documents cités:
- EP-A- 0 593 240
- US-A- 3 468 992
- US-A- 3 991 166
- US-A- 4 243 621
- US-A- 4 533 646
- US-A- 5 380 782
- US-A1- 2007 166 218

## Description

L'invention se rapporte à un produit réfractaire fritté, notamment sous la forme d'un bloc, et à un mélange particulaire permettant de fabriquer un tel produit. L'invention se rapporte également à l'utilisation de ces produits et blocs pour fabriquer des revêtements de fours métallurgiques, et en particulier des revêtements de creusets ou de tuyères de hauts-fourneaux, ou des revêtements de four de cuisson d'anodes destinées à l'électrolyse, par exemple de l'aluminium, ou encore des revêtements d'incinérateurs d'ordures ménagères ou des revêtements réfractaires d'échangeurs thermiques.

Les bétons réfractaires utilisés dans ces applications sont classiquement constitués d'un mélange d'un granulat et d'un liant hydraulique à base d'oxydes d'alcalino-terreux, en particulier à base d'aluminate de chaux. Ce dernier liant est généralement appelé « ciment ». La présence d'oxydes alcalino-terreux dans ces produits, appelés « castable » en anglais, est cependant préjudiciable à la réfractarité et augmente la déformation sous charge. De plus, ces oxydes réagissent en milieu réducteur.

Notamment pour constituer le revêtement des creusets de hauts-fourneaux, il est aussi connu d'utiliser des blocs carbonés. Ces blocs sont classiquement obtenus par mise en forme d'une pâte liée avec de la résine ou du brai, puis cuisson à une température supérieure à 1200 °C. Le produit est ainsi calciné et les liants organiques pyrolysés. Les blocs carbonés présentent cependant une faible résistance à l'oxydation et à la corrosion par la fonte et une résistance à l'érosion d'autant plus faible qu'ils contiennent des proportions élevées de carbone sous forme graphite.

Par ailleurs, on connaît des produits réfractaires composites comportant un granulat réfractaire lié par une matrice liante de type SiAlON. Des produits réfractaires à base de SiAION sont notamment connus de US 4,533,646, US 3,991,166, ou US 4,243,621. On connaît aussi des produits à matrice liante de type Si₃N₄ avec ajout à base de phosphore, par exemple de US 3,468,992 ou de CN 1 803 716.

Ces produits présentent un compromis très attractif entre leur coût de fabrication et leurs performances. Ils sont généralement obtenus par frittage réactif sous azote d'une préforme adaptée pour réagir avec l'azote ambiant et constituer ladite matrice de SiAlON.

Cette technologie ne permet cependant pas de fabriquer des gros blocs dans des conditions de production industrielle. En effet, les blocs obtenus présentent des teneurs à coeur en métaux résiduels élevées, typiquement supérieures à 2 %. Ils peuvent également présenter des phases cristallisées hygroscopiques et/ou non réfractaires et/ou inadaptées à l'application visée par exemple parce qu'elles sont solubles dans la fonte ou extrêmement réactives aux produits alcalins de type Potassium. Ces blocs peuvent encore présenter des phases dont l'oxydation est néfaste et des hétérogénéités de porosité ou des gradients internes de propriétés inacceptables, notamment des gradients de couleur et/ou d'aspect. Ces gradients internes peuvent entraîner en effet des gradients thermiques élevés au sein du bloc en service, et donc des contraintes mécaniques qui conduisent notamment à des fissures dans le bloc et à son usure prématurée. Ces blocs ne peuvent donc généralement pas être utilisés dans les hauts fourneaux métallurgiques, notamment pour la fabrication de fonte.

Par ailleurs, on connaît de US 5 380 782 une dispersion aqueuse de matériaux céramiques, et de US 3 468 992 un procédé de fabrication d'articles de nitrure de silicium.

Il existe donc un besoin pour un produit réfractaire apte à résoudre, au moins partiellement, un ou plusieurs des problèmes susmentionnés.

Un but de l'invention est de satisfaire ce besoin.

L'invention propose un produit réfractaire fritté selon la revendication 1.. Classiquement, dans la formule SiₓAl_{y}OᵤNᵥ, x, y, u et v sont des indices massiques.

Cette définition de la phase SiAlON exclut en particulier le Si₃N₄. Du Si₃N₄ peut cependant être présent dans le produit, notamment dans le granulat.

Comme cela apparaîtra plus clairement dans la suite de la description, cette teneur en phosphore permet notamment, de manière surprenante, d'obtenir une résistance mécanique, notamment à l'écrasement et à la flexion à froid, une résistance à l'oxydation et une résistance à l'abrasion élevées.

Ce produit fritté peut être un béton, mais peut également être un pisé. En particulier, la partie de la matrice complémentaire à la partie cristallisée azotée peut comprendre, voire être constituée, d'un liant hydraulique, d'une résine, en particulier une résine thermodurcissable, ou d'un mélange de ces constituants.

Dans différents modes de réalisation, ce produit fritté peut encore présenter une ou plusieurs des caractéristiques optionnelles de produit mentionnées dans la liste suivante :
- x est supérieur ou égal à 0,01, à 0,1 ou à 0,2 ; et/ou
- y est supérieur à 0,01, à 0,05 ou à 0,14 ; et/ou
- u est supérieur ou égal à 0,01, à 0,05 ou à 0,14 ; et/ou
- v est supérieur à 0,01, à 0,1 ou à 0,3 ;
- Le produit comporte plus de 0,3 %, de préférence plus de 0,4 %, de phosphore, en pourcentage en masse sur la base de la partie cristallisée azotée. De préférence, la matrice comporte moins de 2,5 %, ou moins de 2 %, voire moins de 1,5 %, voire moins de 1 %, de phosphore, en pourcentage en masse sur la base de la partie cristallisée azotée ;
- Le produit comporte moins de 0,4 %, de préférence moins de 0,3 %, ou moins de 0,2 %, voire moins de 0,1 % de bore en pourcentage en masse sur la base du produit ;
- Au moins 90%, voire 95 %, voire 99 %, voire 100 % en masse de la partie cristallisée azotée fait partie de la matrice ;
- La partie cristallisée azotée représente au moins 50 %, ou au moins 80 %, voire au moins 90%, voire au moins 95 %, voire sensiblement 100 % de la masse de la matrice, le complément à 100 % étant par exemple constitué par des métaux résiduels et des oxydes, en particulier de l'alumine ;
- Le produit comporte une phase de formule Si_{6-z}Al_{z}O_{z}N_{8-z}, avec 0<z<4,2, dite phase « β'SiAlON », cette phase pouvant être partiellement ou totalement dans la matrice ;
- z est supérieur à 1, voire supérieur à 3 et/ou inférieur à 4, voire inférieur à 3,5 ;
- La phase β'SiAlON représente plus de 60 %, ou plus de 70 %, voire plus de 75 % de la masse de la partie cristallisée azotée ;
- Ladite partie cristallisée azotée comporte une phase AIN15R de formule SiₓAl_{y}OᵤNᵥ, dans laquelle 0,12 ≤ x ≤ 0,33 et 0,78 ≤ y ≤ 0,99 et 0,33 ≤ u ≤ 0,55 et 0,78 ≤ v ≤ 1 ;
- La phase AIN15R représente plus de 18%, voire plus de 20%, de la masse de la partie cristallisée azotée ;
- Ladite partie cristallisée azotée est constituée, pour plus de 80% en masse, de ladite phase β'SiAlON et, le cas échéant, de ladite phase AlN15R, en pourcentage en masse sur la base de la matrice ;
- La phase β'SiAlON et la phase AlN15R éventuelle représentent ensemble plus de 80 %, voire plus de 90 %, voire plus de 95 %, ou plus de 99 %, voire sensiblement 100 % de la masse de la partie cristallisée azotée, le complément à 100 % étant constitué par le phosphore (P), éventuellement d'autres phases azotées, notamment BN, TiN, Si₃N₄, ZrN, Si₂ON₂, O'SiAlON de formule Si₂₋ₓAlₓOₓ₊₁N₂₋ₓ avec x > 0 ou X SiALON (voir US 5,521,129), éventuellement des traces d'alumine, voire de silice, et les impuretés ;
- La matrice représente au moins 5 %, au moins 10%, au moins 13%, voire au moins 15 % de la masse du produit et/ou moins de 60%, moins de 40%, moins de 30 %, voire moins de 25 % de la masse du produit. Par définition, le complément est constitué par le granulat ;
- La matrice est obtenue par frittage réactif ;
- Ladite teneur en phosphore est calculée sur la base de la seule partie cristallisée azotée présente dans la matrice, c'est-à-dire est égale à 100 * quantité massique de phosphore dans le produit / masse de la partie cristallisée azotée présente dans la matrice ;
- Le produit étant constitué
   - d'une première partie constituée par la masse de l'ensemble des grains présentant une taille supérieure à une taille de seuil Dₛₑᵤᵢₗ choisie parmi 200 µm, 100 µm, 50 µm et 20 µm,
   - d'une deuxième partie liant les grains de la première partie (la somme des masses des première et deuxième parties étant donc égale à la masse du produit),
   ladite teneur en phosphore est mesurée sur la base de la seule partie cristallisée azotée présente dans la deuxième partie ;
- La deuxième partie représente au moins 5 %, au moins 10%, au moins 13%, ou au moins 15 % de la masse du produit et/ou moins de 60%, moins de 40%, moins de 30 %, ou moins de 25 % de la masse du produit ;
- Dₛₑᵤᵢₗ est déterminé en fonction de l'application visée, et, par exemple, est égal à 200 µm pour fabriquer des blocs selon l'invention ou à 100 µm ou 50 µm ou 20 µm pour fabriquer des produits minces ;
- La deuxième partie peut comporter des grains présentant une taille inférieure à la taille de seuil Dₛₑᵤᵢₗ ;
- La teneur en métaux résiduels, en particulier en silicium, est inférieure à 1,8 %, voire 1,5 %, voire inférieure à 1 %, en pourcentages massiques sur la base du produit ;
- Le rapport massique AlN15R / (AlN15R + β'SiAlON) est supérieur à 0,18, voire supérieur à 0,2 ;
- Dans un mode réalisation, le produit présente une teneur totale en oxydes alcalino-terreux, en particulier en CaO et/ou en MgO, inférieure à 2 %, de préférence inférieure à 1,5 % et/ou supérieure à 0,2 %, voire supérieure à 0,4 %, en pourcentages massiques sur la base du produit ;
- Le produit présente une teneur totale en oxydes de métaux alcalins, notamment Na₂O et K₂O, inférieure à 1 %, en pourcentage massique sur la base du produit ;
- Le produit présente une teneur totale en oxydes de métaux alcalins supérieure à 0,4 %, en pourcentage massique sur la base du produit ;
- Dans un mode de réalisation, le granulat n'est ni azoté, ni phosphoré.
- Le granulat est composé pour plus de 70 %, voire pour plus de 80 %, voire plus de 90 %, voire même sensiblement 100 %, en masse, de grains en un matériau choisi parmi l'alumine, et notamment le corindon, blanc ou noir, ou l'alumine tubulaire, la mullite, les précurseurs de mullite, l'oxyde de chrome, la zircone, le zircon, les nitrures, le nitrure de silicium Si₃N₄, les carbures, et notamment le carbure de silicium SiC, le carbone amorphe ou sous forme au moins partiellement cristallisée, et des mélanges de ces matières, et/ou est composé d'un mélange des grains mentionnés précédemment ;
- Le granulat comporte des grains de carbure de silicium SiC, voire est constitué de tels grains. Dans un mode de réalisation, le produit selon l'invention comporte plus de 5% de SiC, en pourcentage en masse sur la base du produit ;
- Notamment pour la fabrication de gros blocs, au moins 50 %, voire au moins 60 % ou au moins 70 % en masse, des grains de granulat présentent une taille supérieure à 0,2 mm et/ou au moins 15 %, voire au moins 20 %, voire même au moins 25 % des grains présentent une taille supérieure à 2 mm, voire à 3 mm ou à 5 mm, et/ou au moins 90 %, voire au moins 95 % en masse des grains de granulat présentent une taille inférieure à 20 mm, voire à 15 mm, voire à 10 mm ou à 5 mm ;
- Notamment pour la fabrication de gros blocs, la taille médiane des grains du granulat est supérieure à 3 mm, voire 4 mm et/ou inférieure à 15 mm, 10 mm, 6 mm ;
- Notamment pour la fabrication de produits minces, la taille médiane des grains du granulat est supérieure à 5 µm, voire 10 µm, 30 µm ou 50 µm et/ou inférieure à 3 mm, 2 mm, 1 mm, 500 µm, voire 100 µm ;
- La teneur en azote dans le produit est supérieure à 3,1 %, supérieure à 3,5 %, voire supérieure ou égale à 4 %, en pourcentage massique sur la base du produit ;
- La teneur en β'SiAlON dans le produit est supérieure à 12 %, supérieure à 14 %, voire supérieure ou égale à 15 %, en pourcentage massique sur la base du produit ;
- Le produit est en un matériau choisi parmi un béton, façonné ou non façonné, et un pisé, façonné ou non façonné ;
- Le produit ne comporte pas des monomère d'acide carboxylique, ni de N-tertiobutylacrylamide.

L'invention concerne également un mélange particulaire sec ou humide, comportant une source de phosphore, une source de silicium, une source d'aluminium et une source d'oxygène, voire une source d'azote, dans des proportions et sous une forme adaptées pour former par frittage réactif sous azote, ou par frittage sous atmosphère non-oxydante si de l'azote est présent en quantité suffisante dans le mélange particulaire, une matrice d'un produit fritté selon l'invention.

De préférence, la composition du mélange particulaire est adaptée de manière que, après mélange avec un granulat réfractaire et frittage, un produit réfractaire selon l'invention soit obtenu. Autrement dit, le mélange particulaire comporte tous les constituants et additifs nécessaires au frittage, sauf le granulat.

Dans un mode de réalisation, le mélange particulaire selon l'invention comporte également le granulat réfractaire. Il constitue alors un produit non fritté selon l'invention qui peut être coulé sur place pour réaliser un revêtement. Ce produit non fritté et non façonné peut être également mis sous la forme d'un bloc, qui sera assemblé puis fritté sur site. La charge de départ décrite ci-après dans le cadre du procédé de fabrication selon l'invention et versée dans le moule constitue un exemple d'un produit non fritté selon l'invention.

Suivant différents modes de réalisation de l'invention, le mélange particulaire peut encore comporter une ou plusieurs des caractéristiques optionnelles suivantes :
- Le mélange particulaire comporte un composé contenant du phosphore choisi parmi les phosphates, et notamment les hydrogénophosphates, les polyphosphates, et notamment l'aluminophosphate ou les polyphosphates de métaux alcalins, par exemple l'héxamétaphosphate de sodium, les composés organophosphorés, les polymères organophosphorés, et les mélanges de ces composés ;
- Le mélange particulaire comporte plus de 1 %, plus de 5 %, voire plus de 8 %, et/ou moins de 15 %, voire moins de 10 % de silice, de préférence sous forme micronique et/ou sous forme colloïdale, par exemple de la fumée de silice, en pourcentage en masse sur la base de la matière sèche du mélange particulaire ;
- Le mélange particulaire comporte plus de 0,5 % et/ou moins de 5 %, voire moins de 2 % de silicium métal, en pourcentages massiques sur la base de la matière sèche du mélange particulaire, la taille médiane du silicium métal étant de préférence inférieure à 200 µm, voire inférieure à 60 µm ;
- Le mélange particulaire comporte plus de 1 %, voire plus de 2 %, voire plus de 5 %, et/ou moins de 15 %, voire moins de 10 % d'aluminium métal, en pourcentages en masse sur la base de la matière sèche du mélange particulaire, la taille médiane de l'aluminium métal étant de préférence inférieure à 200 µm, voire inférieure à 60 µm ;
- Le mélange particulaire comporte plus de 0,5 %, plus de 1%, et/ou moins de 10%, moins de 8%, voire moins de 5% d'alumine calcinée, en pourcentages en masse sur la base de la matière sèche du mélange particulaire, la taille médiane étant de préférence inférieure à 10 µm, voire inférieure à 5 µm ;
- De préférence, la source de silicium est de la silice en poudre et/ou la source d'aluminium est de l'aluminium en poudre et/ou un alliage d'aluminium ;
- Le rapport massique R du Phosphore sur l'Aluminium métal contenu dans le mélange particulaire est de préférence supérieur à 5.10⁻⁵ et/ou inférieur à 5.10⁻².

Un mélange particulaire selon l'invention peut être livré prêt à l'emploi, conditionné par exemple en sacs ou en big-bags ou, lorsqu'il est humide, être par exemple conditionné en fûts.

Dans un mode de réalisation, l'invention concerne un bloc réfractaire fritté dont au moins une partie, de préférence la totalité, est constituée par un produit réfractaire fritté selon l'invention.

Dans un mode de réalisation, l'invention concerne un bloc réfractaire
- constitué
   - d'une première partie constituée par la masse de l'ensemble des grains présentant une taille supérieure à une taille de seuil Dₛₑᵤᵢₗ de 200 µm et
   - d'une deuxième partie liant les grains de la première partie, la deuxième partie représentant par exemple au moins 5 %, au moins 10%, au moins 13%, ou au moins 15 % de la masse du bloc et/ou moins de 60%, voire moins de 40%, ou moins de 30 %, ou moins de 25 % de la masse du bloc ;
- présentant au moins une dimension hors tout, voire une épaisseur, ou une longueur, ou une largeur, d'au moins 120 mm, et
- dont au moins une partie, par exemple le coeur, voire la totalité, est en un produit fritté
   - comportant une partie cristallisée azotée comportant une phase SiAlON de formule SiₓAl_{y}OᵤNᵥ, dans laquelle
      ▪ x est supérieur à 0, ou supérieur ou égal à 0,01, à 0,1 ou à 0,2, et inférieur ou égal à 1 ;
      ▪ y est supérieur à 0, à 0,01, à 0,05 ou à 0,14, et inférieur ou égal à 1 ;
      ▪ u est supérieur à 0, ou supérieur ou égal à 0,01, à 0,05 ou à 0,14, et inférieur ou égal à 1 ;
      ▪ v est supérieur à 0, à 0,01, à 0,1 ou à 0,3, et inférieur ou égal à 1 ;
   - présentant une teneur en phosphore supérieure à 0,2%, en pourcentage en masse sur la base de ladite partie cristallisée azotée.

Ce produit peut présenter une ou plusieurs des caractéristiques optionnelles de produit mentionnées dans la liste ci-dessus.

Les première et deuxième parties peuvent notamment correspondre à un granulat et à une matrice.

Dans un mode de réalisation, l'invention concerne un bloc réfractaire
- constitué
   - d'une première partie constituée par la masse de l'ensemble des grains présentant une taille supérieure à une taille de seuil Dₛₑᵤᵢₗ de 200 µm et
   - d'une deuxième partie liant les grains de la première partie, la deuxième partie représentant par exemple au moins 5 %, au moins 10%, ou au moins 13%, voire au moins 15 % de la masse du bloc et/ou moins de 60%, voire moins de 40%, ou moins de 30 %, ou moins de 25 % de la masse du bloc ;
- présentant au moins une dimension hors tout, voire une épaisseur, ou une longueur, ou une largeur, d'au moins 120 mm, et
- dont au moins une partie, par exemple le coeur, voire la totalité, est en un produit fritté
   - comportant une partie cristallisée azotée comportant une phase SiAION de formule SiₓAl_{y}OᵤNᵥ, dans laquelle
      ▪ x est supérieur à 0, ou supérieur ou égal à 0,01, à 0,1 ou à 0,2, et inférieur ou égal à 1 ;
      ▪ y est supérieur à 0, à 0,01, à 0,05 ou à 0,14, et inférieur ou égal à 1 ;
      ▪ u est supérieur à 0, ou supérieur ou égal à 0,01, à 0,05 ou à 0,14, et inférieur ou égal à 1 ;
      ▪ v est supérieur à 0, à 0,01, à 0,1 ou à 0,3, et inférieur ou égal à 1 ;
   ledit produit fritté présentant une teneur en phosphore supérieure à 0,2%, en pourcentage en masse sur la base de ladite partie cristallisée azotée et comportant une teneur en métaux résiduels, en particulier en silicium, inférieure à 1,8%, voire inférieure à 1,5 %, voire inférieure à 1 %, en pourcentages massiques sur la base du produit.

Ce produit peut présenter une ou plusieurs des caractéristiques optionnelles de produit mentionnées dans la liste ci-dessus.

Les première et deuxième parties peuvent notamment correspondre à un granulat et à une matrice.

Quel que soit le mode de réalisation, le bloc peut encore présenter une ou plusieurs des caractéristiques optionnelles suivantes :
- Le bloc présente une masse de plus de 50 kg, de plus de 150 kg, de plus de 300 kg, voire de plus de 900 kg et/ou de moins de 2 tonnes. En particulier, il peut présenter une masse d'environ 1 tonne :
- Le bloc présente au moins une dimension (épaisseur, longueur, ou largeur) d'au moins 120 mm , de préférence d'au moins 150 mm, voire 200 mm, voire 300 mm, voire 400 mm, voire 600 mm ou même 800 mm, voire encore 1000 mm ;
- L'épaisseur, la longueur et la largeur du bloc sont d'au moins 120 mm, voire 150 mm, voire 300 mm, voire 400 mm, 600 mm ou même 800 mm, voire encore 1000 mm :
- Au moins une dimension hors tout du bloc, en particulier une dimension hors tout transversale, et notamment une longueur et/ou une largeur hors tout transversale, est supérieure à 150 mm, 300 mm, 600 mm, voire 900 mm (cette caractéristique est notamment utile dans le cas d'un bloc en "U") ;
- Le bloc présente une surface extérieure de forme générale convexe, par exemple une forme parallélépipédique, ou une surface extérieure de forme générale présentant des concavités. Autrement dit, la surface extérieure du bloc comporte des concavités modifiant sa forme générale. Par exemple le bloc peut être de section transversale en forme de « U », de « + », ou de « X ».
- Le bloc peut présenter, localement, un ou plusieurs trous, traversants ou non traversants, par exemple en forme d'alvéole ou de trou tubulaire, rectiligne ou non, par exemple prévus pour faciliter le passage éventuel d'un fluide (liquide ou gaz) ou augmenter les surfaces d'échange thermique ;
- Le « coeur », c'est-à-dire la partie centrale, du bloc est en un produit conforme à l'invention ;
- Tout le bloc, sauf la « peau », c'est-à-dire sauf la partie périphérique s'étendant, à partir de la surface, sur une épaisseur inférieure à 1000 µm, de préférence inférieure à 500µm est en un produit fritté conforme à l'invention.

On décrit encore un produit mince fritté dont au moins une partie, de préférence la totalité, est constituée par un produit réfractaire fritté selon l'invention.

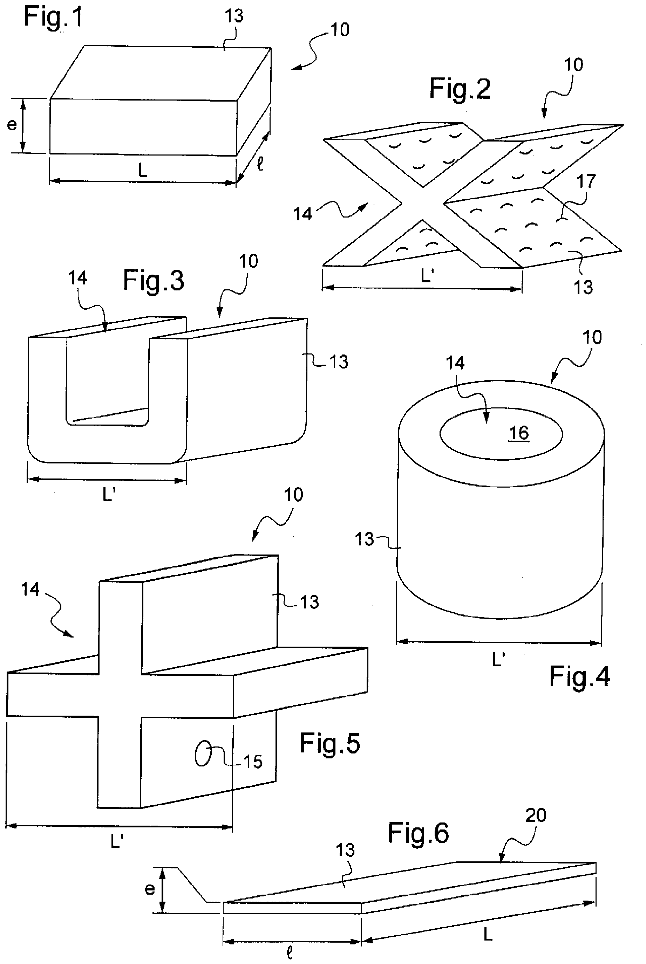

Un produit mince fritté selon l'invention peut en particulier présenter une épaisseur « e » inférieure à 100 mm, 50 mm, voire 25 mm. Il peut en particulier présenter la forme d'une plaque mince (figure 6).

On décrit encore un procédé de fabrication d'un produit réfractaire fritté, notamment d'un bloc réfractaire fritté, à partir d'une charge de départ déterminée de manière à ce que ce produit soit conforme à l'invention. Cette charge de départ peut en particulier présenter une ou plusieurs des caractéristiques optionnelles d'un mélange particulaire selon l'invention tel que décrit ci-dessus.

Dans un mode de réalisation, ce procédé comprend les étapes suivantes :
a) préparation d'une charge de départ comportant un granulat réfractaire, des précurseurs de SiAlON et un composé, liquide ou solide, contenant du phosphore ;
b) versement de ladite charge de départ dans un moule ;
c) mise en forme de la charge de départ à l'intérieur du moule, par compaction, de manière à former une préforme ;
d) démoulage de ladite préforme ;
e) séchage de la préforme, de préférence de manière jusqu'à ce que l'humidité résiduelle soit comprise entre 0 et 0,5 % ;
f) cuisson de la préforme sous atmosphère non-oxydante si de l'azote est apporté par la charge de départ ou sous atmosphère réductrice d'azote, de préférence à une température comprise entre 1300 et 1600°C, de manière à obtenir un bloc.

Selon l'invention, la charge de départ est déterminée de manière à ce que, à l'issue de l'étape f), le bloc soit conforme à l'invention ou de manière à ce que la charge de départ soit un mélange particulaire conforme à l'invention.

Un produit réfractaire selon l'invention ou un bloc réfractaire fabriqué ou pouvant être fabriqué suivant un procédé tel que décrit ici peuvent être utilisés afin de constituer tout ou partie d'un revêtement d'un four, en particulier d'un four métallurgique. En particulier, ce revêtement peut être celui d'un haut-fourneau. Il peut notamment constituer, au moins en partie, le creuset et/ou une tuyère et/ou un étalage d'un haut-fourneau. Ce revêtement peut encore être celui d'un four de cuisson d'anodes destinées à l'électrolyse, par exemple de l'aluminium.

Un produit réfractaire selon l'invention ou un bloc réfractaire fabriqué ou pouvant être fabriqué suivant un procédé tel que décrit ici peuvent être utilisés afin de constituer tout ou partie d'un revêtement d'un échangeur thermique ou d'un incinérateur d'ordures ménagères.

L'invention concerne aussi un dispositif choisi parmi un four et un échangeur thermique, remarquable en ce qu'il comporte un revêtement au moins en partie en un produit réfractaire fritté selon l'invention, ou constitué par un tel produit.

Le four peut être en particulier un four d'incinérateur, un four métallurgique, notamment un haut-foumeau ou un four de cuisson d'anodes. L'échangeur thermique peut notamment être celui d'un incinérateur d'ordures ménagères.

Le produit mince décrit ici peut être utilisé afin de constituer un support pour la cuisson de produits céramiques.

Sauf mention contraire, tous les pourcentages relatifs à la composition du produit, fritté ou non, ou relatifs à la charge de départ, sont des pourcentages massiques.

### Définitions

On appelle « produit non façonné » un produit, humide ou sec, ne présentant pas de rigidité intrinsèque, comme une poudre ou une charge de départ humide apte à être versée dans un moule.

Au contraire, on appelle « produit façonné » un matériau structuré, c'est-à-dire conservant sa forme lorsqu'il est manipulé, comme une préforme démoulée ou un produit fritté.

On appelle ici « produit non fritté » un produit façonné ou non façonné qui, par frittage, peut conduire à un produit fritté selon l'invention.

On appelle « produit préfabriqué » un produit non fritté façonné qui, par frittage, peut conduire à un produit fritté selon l'invention.

On appelle « béton non façonné » un mélange particulaire sec ou humide comportant au moins un agent de prise hydraulique et apte à prendre en masse de manière à constituer un matériau sec et solide dont la microstructure est constituée par un granulat dont les grains sont solidarisés au moyen d'une matrice. Un béton non façonné est apte à être appliqué par coulage, associé à une opération de vibration ou non, ou par projection.

On appelle « pisé non façonné » un mélange particulaire sec ou humide ne comportant pas d'agent de prise hydraulique et apte à prendre en masse de manière à constituer un matériau sec et solide dont la microstructure est constituée par un granulat dont les grains sont solidarisés au moyen d'une matrice, appelé « pisé façonné ». Un pisé non façonné est apte à être appliqué par damage et/ou pressage, associé ou non à une opération de vibration. Dans cette définition, on inclut en particulier les pisés couramment appelés « pisés secs », en anglais « dry vibrating cements », et les masses à damer, en anglais « ramming mixes ».

La forme d'un béton ou d'un pisé façonné peut être quelconque. Le béton ou le pisé façonné peut notamment présenter la forme d'un bloc ou d'une couche, par exemple lorsqu'il résulte de la prise en masse d'un revêtement. Classiquement, le béton ou le pisé façonné est obtenu par prise en masse d'un mélange particulaire qui a subi une étape d'activation, par exemple par humidification avec de l'eau.

On appelle « frittage » un traitement thermique par lequel le produit forme une microstructure constituée d'un granulat dont les grains sont solidarisés au moyen d'une matrice. Un produit fritté selon l'invention comporte une matrice de SiAION obtenue par frittage sous atmosphère non oxydante si de l'azote est apporté par au moins un des constituants de la charge de départ ou par frittage sous atmosphère d'azote, de préférence à une température comprise entre 1300 et 1600°C, ce dernier type de procédé, permettant un frittage réactif sous azote, étant bien connu de l'homme du métier.

Par « frittage sous azote », on entend un frittage dans un environnement gazeux comportant plus de 90 %, de préférence plus de 95 % ou, de préférence encore, sensiblement 100 % d'azote, en pourcentage volumique.

On appelle « silicium résiduel » le silicium sous forme métallique présent dans le produit fritté.

Dans un produit fritté selon l'invention, on appelle « granulat » l'ensemble des grains réfractaires liés par la matrice et qui, lors du frittage, ont sensiblement conservé la forme et la nature chimique qu'ils présentaient dans la charge de départ. En particulier, à la différence des particules à l'origine de la matrice, ou « précurseurs de la matrice », les grains du granulat ne sont pas complètement fondus pendant le frittage.

Par extension, on appelle également « granulat » l'ensemble de ces grains tels qu'ils se présentaient dans la charge de départ. La nature du granulat dans le produit selon l'invention n'est pas limitative, le granulat se caractérisant par sa stabilité structurelle et sa stabilité chimique pendant le frittage. Ainsi, en fonction de la taille de ses particules par exemple, une poudre, par exemple d'alumine, pourrait être considérée comme un granulat ou comme un précurseur de la matrice.

Dans un mode de réalisation de l'invention, le granulat est une matière différente des constituants de la matrice.

Dans un autre mode de réalisation de l'invention, le granulat est en une matière identique à certains des constituants de la matrice. Par exemple, le granulat peut incorporer une phase cristallisée azotée. Il peut alors être difficile de distinguer la matrice du granulat sans connaître le procédé de fabrication. C'est pourquoi, dans certains modes de réalisation de l'invention, pour évaluer la quantité de matrice, on considère toute la masse du produit à l'exclusion des grains présentant une taille supérieure à une taille de seuil.

Par « matrice », on entend une phase cristallisée ou non, assurant une structure continue entre les grains et obtenue, lors du frittage, à partir des constituants de la charge de départ et éventuellement des constituants de l'environnement gazeux de cette charge de départ. Une matrice entoure sensiblement les grains du granulat, c'est-à-dire les enrobe.

Une matrice obtenue par frittage réactif présente des particularités. Notamment, lors du frittage réactif, il se produit une nitruration des métaux. L'augmentation de volume qui en résulte, typiquement de 1 à 20 %, permet avantageusement de combler les pores de la matrice et/ou de compenser le retrait occasionné par le frittage des grains. Le frittage réactif permet ainsi de limiter la fissuration de la matrice et donc d'améliorer la résistance mécanique du produit. Les produits frittés réactivement présentent ainsi une porosité ouverte et/ou fermée significativement plus faible que celle(s) des autres produits frittés dans des conditions de température similaires. A la cuisson, les produits frittés réactivement ne présentent sensiblement pas de retrait.

Par « impuretés », on entend les constituants inévitables, introduits nécessairement avec les matières premières ou résultant de réactions avec ces constituants. Les impuretés ne sont pas des constituants nécessaires, mais seulement tolérés.

Par « silice sous forme micronique », on entend une poudre de silice dont les particules, partiellement amorphes, ont une taille médiane comprise entre 0,01 et 4 µm. La silice sous forme colloïdale présente une taille médiane de particules pouvant être plus faible, généralement de l'ordre de quelques nanomètres.

Par « résine thermodurcissable », on entend un polymère transformable par traitement thermique (chaleur, radiation) ou physico-chimique (catalyse, durcisseur) en matériau infusible et insoluble. Les résines thermodurcissables prennent ainsi leur forme définitive au premier durcissement, la réversibilité étant impossible. Les résines thermodurcissables comprennent notamment les résines phénoliques, à base de silicone ou encore époxides. Ces résines peuvent être utilisées selon la présente invention.

Dans un matériau façonné, on appelle « taille » d'une particule ou d'un grain la moyenne entre sa plus grande dimension et sa plus petite dimension, ces dimensions étant mesurées sur une coupe dudit matériau.

Dans un matériau non façonné, on appelle « taille » d'une particule ou d'un grain sa plus grande dimension mesurée sur une image de cette particule. La mesure de la taille des grains ou des particules d'un ensemble s'effectue classiquement à partir d'une image de cet ensemble versé sur un feutre autocollant.

On appelle « taille médiane » d'un ensemble de particules ou de grains, généralement notée D50, la taille divisant les grains ou les particules de cet ensemble en première et deuxième populations égales en masse, ces première et deuxième populations ne comportant que des grains présentant une taille supérieure, ou inférieure respectivement, à la taille médiane.

On appelle « compaction » toute méthode de mise en forme, notamment par pressage, extrusion, coulage, vibration, pilonnage ou par une technologie combinant ces différentes techniques.

On appelle « « zircone » l'oxyde de zirconium ZrO₂.

On appelle « alumine » l'oxyde d'aluminium Al₂O₃.

On appelle « silice » l'oxyde de silicium SiO₂.

Une dimension « hors tout » est une distance mesurée, suivant une direction déterminée, entre les deux points de la surface extérieure d'un bloc qui sont les plus écartés l'un de l'autre. La dimension hors tout est en particulier utile pour évaluer la taille de blocs en forme de « U », ou de blocs présentant des parties creuses ouvertes et/ou fermées, notamment des blocs utilisés pour les parois de four de cuisson d'anodes destinées à l'électrolyse de l'aluminium. La dimension hors tout « transversale » correspond à une dimension mesurée dans un plan transversal, c'est-à-dire sur une section transversale du bloc. La longueur et la largeur hors tout transversales sont des dimensions transversales appropriées, par exemple, pour mesurer l'écartement entre les deux faces latérales des branches du « U » qui sont parallèles et orientées vers l'extérieur du « U » (c'est-à-dire qui ne sont pas orientées vers l'âme du « U »). Ainsi, la dimension hors tout transversale peut être supérieure à l'épaisseur des branches du « U » ou à leur hauteur.

On appelle « produit mince » un produit présentant une épaisseur comprise entre de 3 à 120 mm.

### Brève description des figures

D'autres caractéristiques et avantages de l'invention apparaîtront encore à la lecture de la description détaillée qui va suivre et à l'examen du dessin annexé dans lequel les figures 1 à 5 représentent, en perspective, différentes formes de blocs selon l'invention et la figure 6 représente, en perspective, un exemple de produit mince.

### Description détaillée

Pour fabriquer un produit réfractaire fritté selon l'invention, on peut procéder suivant les étapes décrites précédemment.

A l'étape a), les matières particulaires sont classiquement mélangées jusqu'à obtention d'un mélange homogène.

La nature et les quantités de matières premières sont déterminées de manière à ce que le bloc en produit réfractaire obtenu à l'issue de l'étape f) soit conforme à l'invention.

La façon de déterminer les proportions des constituants de la charge de départ est parfaitement connue de l'homme du métier. Par exemple, l'homme du métier sait le carbure de silicium présent dans la charge de départ se retrouve dans le produit fritté. Il sait également déterminer quels constituants vont se transformer pour constituer la matrice.

Certains oxydes peuvent être apportés par les additifs classiquement utilisés pour fabriquer des produits, par exemple les agents de frittage, les dispersants comme les polyphosphates de métaux alcalins ou les dérivés méthacrylates. La composition de la charge de départ peut donc varier, notamment en fonction des quantités et de la nature des additifs présents, ainsi que du degré de pureté des matières premières utilisées.

De préférence, la charge de départ est déterminée pour que l'alumine, la silice et le granulat, par exemple du carbure de silicium, représentent au moins 80 %, de préférence au moins 85 % de la masse minérale sèche du produit fritté.

Le granulat peut être constitué de grains à base d'oxydes réfractaires ou de réfractaires non oxydes, ou des grains à base de carbone, notamment d'anthracite ou de graphite, ou à base de carbures comme le carbure de silicium. Le granulat peut en particulier être constitué de grains dont la composition comporte les éléments Aluminium (Al) et/ou Silicium (Si).

De préférence, le granulat est composé pour plus de 70 %, voire pour plus de 80 %, voire plus de 90 %, voire même sensiblement 100 %, en masse, de grains d'alumine, et notamment de corindon, blanc ou noir, ou d'alumine tubulaire, et/ou de mullite ou de précurseurs de mullite, et/ou d'oxyde de chrome, et/ou de zircone, et/ou de zircon et/ou de nitrures, et notamment de nitrure de silicium Si₃N₄, et/ou de carbures, et notamment de carbure de silicium SiC. Il peut aussi être formé par des grains constitués d'un mélange des constituants précédents. Enfin, il peut être formé d'un mélange des grains mentionnés précédemment.

Dans un mode de réalisation, et notamment lorsqu'une conductivité thermique élevée est recherchée, par exemple pour fabriquer une paroi d'un four de fabrication d'anodes destinées à l'électrolyse de l'aluminium ou un revêtement d'incinérateur d'ordures ménagères ou celui d'un échangeur thermique, le granulat comporte des grains de carbure de silicium SiC, voire est constitué de tels grains. Le produit peut alors comporter plus de 5% de SiC, en pourcentage en masse sur la base du produit.

Les produits selon l'invention peuvent alors présenter une conductivité thermique supérieure aux produits réfractaires à base d'argile ou d'alumine utilisés à ce jour.

Le phosphore peut être apporté sous forme liquide ou sous forme de solide sous la forme d'une poudre. Il peut être en particulier apporté sous forme de phosphate, et notamment d'hydrogénophosphate, ou sous la forme d'un polyphosphate, et notamment d'aluminophosphate ou de polyphosphate de métaux alcalins, par exemple d'héxamétaphosphate de sodium. Des composés organophosphorés ou des polymères organophosphorés peuvent également convenir.

De préférence l'élément silicium pour la matrice est apporté par de la silice, notamment sous forme de silice micronique (par exemple sous forme de fumée de silice ou de silice micronisée) ou de silice colloïdale, notamment pour fabriquer des blocs d'au moins 50 kilos, voire d'au moins 150 kilos et/ou présentant des dimensions d'au moins 120 mm et/ou une dimension hors tout supérieure à 120 mm.

Le silicium de la matrice peut notamment être apporté, au moins en partie, par une poudre de silicium métal.

La source d'aluminium pour constituer la matrice peut inclure une poudre comportant de l'aluminium métallique. Avantageusement, la mise en oeuvre d'aluminium métallique permet d'obtenir, après frittage, une matrice stable et entourant bien les grains du granulat. L'utilisation d'une poudre d'aluminophosphate, qui permet d'amener simultanément l'élément phosphore et en partie l'élément aluminium, est préférée.

De préférence, les sources d'aluminium pour la matrice incluent également des poudres d'alumine, notamment d'alumine calcinée.

Des alliages mixtes contenant les éléments silicium et aluminium peuvent également être utilisés.

De préférence, la charge de départ comporte entre 0,1 % et 2 %, de préférence moins de 0,5 % d'un dispersant, en pourcentages en masse par rapport à la masse de la charge de départ sèche. Le dispersant peut par exemple être choisi parmi les polyphosphates de métaux alcalins ou les dérivés méthacrylates. Tous les dispersants connus sont envisageables, ioniques purs, stériques purs, par exemple de type polyméthacrylate de sodium, ou combinés. L'ajout d'un dispersant permet de mieux répartir les particules fines, de taille inférieure à 150 microns, et favorise ainsi la résistance mécanique de la matrice.

Le cas échéant, l'ajout d'un dispersant phosphaté doit être pris en compte pour déterminer la quantité de phosphore restant à ajouter dans la charge de départ.

Un liant peut encore être ajouté à la charge de départ. La fonction du liant est de permettre au mélange particulaire de conserver sa forme jusqu'à la cuisson. Le choix du liant est dépendant de la forme souhaitée. Un liant hydraulique de type ciment à base de chaux peut être avantageux pour assurer le durcissement des produits après façonnage et conférer une bonne résistance mécanique au produit fritté. La teneur totale en oxydes alcalino-terreux, et notamment en CaO, dans la charge de départ peut être supérieure à 0,2 %, en pourcentage en masse par rapport à la masse minérale de la charge de départ sèche.

Cependant, de préférence, et notamment pour les gros blocs, la teneur totale en oxydes alcalino-terreux dans la charge de départ est inférieure à 2 %, de préférence inférieure à 1,5 %, voire inférieure à 1 %, en pourcentage en masse par rapport à la masse minérale de la charge de départ sèche. Ces oxydes sont en effet préjudiciables à la réfractarité et à la déformation sous charge. En outre, ces oxydes peuvent nuire à la nitruration.

La charge de départ sèche est malaxée à sec suffisamment pour obtenir un mélange homogène, qui constitue un produit non façonné selon l'invention et peut être conditionné et livré sous cette forme.

Ensuite de l'eau est classiquement ajoutée à la charge de départ. Dans un mode de réalisation, on ajoute au moins 2 %, de préférence au moins 2,5 %, et/ou moins de 10 %, ou moins de 8 %, ou encore moins 5 %, d'eau, en pourcentages en masse par rapport à la masse minérale de la charge de départ sèche. L'eau est ajoutée progressivement dans le malaxeur en fonctionnement jusqu'à obtention d'un mélange humide sensiblement homogène.

Le malaxage de la charge de départ est poursuivi jusqu'à obtention d'un mélange humide sensiblement homogène.

A l'étape b), le mélange humide est coulé dans un moule conformé pour la fabrication d'un bloc aux dimensions souhaitées, par exemple 1,0 x 0,8 x 0,25 m³. Dans un mode de réalisation, au moins une des dimensions du bloc, voire toutes les dimensions du bloc, est supérieure à 0,15 m, ou 0,25 m, voire même 0,4 m.

L'utilisation de gros blocs permet avantageusement de réduire le nombre de joints par rapport à un assemblage de briques réfractaires. Les attaques corrosives par l'intermédiaire des joints sont ainsi limitées. L'utilisation de gros blocs permet également une installation rapide du revêtement réfractaire.

A l'étape suivante de compaction c), le contenu du moule peut par exemple subir une étape de vibration. Pour améliorer la mise en place du mélange dans le moule, on peut notamment utiliser classiquement une aiguille vibrante comme celles utilisées dans le génie civil. La vibration de l'aiguille au sein du mélange humide est de préférence maintenue pendant une durée comprise entre 3 et 20 minutes, en fonction de la taille du bloc.

A l'issue de l'étape de compaction, le moule est de préférence recouvert d'une bâche afin de réduire le séchage superficiel.

Pour faciliter le durcissement, le moule est de préférence immédiatement placé en étuve, dès la fin de la compaction, à une température de préférence supérieure à 40°C et, de préférence, inférieure à 60°C, et pendant une durée variable en fonction des dimensions du bloc, en général de quelques heures à 24 heures.

La préforme est ensuite démoulée (étape d)), puis mise à sécher (étape e)). Le séchage peut être effectué à une température modérément élevée. De préférence, il est effectué à une température comprise entre 110 et 200°C, de préférence sous air ou atmosphère contrôlée en humidité. Il dure classiquement entre 10 heures et une semaine selon le format de la préforme, de préférence jusqu'à ce que l'humidité résiduelle de la préforme soit inférieure à 0,5 %.

La préforme démoulée est un bloc préfabriqué selon l'invention qui présente avantageusement une résistance mécanique suffisante pour pouvoir être manipulé, transporté et éventuellement assemblé.

La préforme séchée est alors mise à cuire (étape f)). La durée de la cuisson, généralement comprise entre 3 et 15 jours environ de froid à froid, est variable en fonction des matériaux mais aussi de la taille et de la forme du bloc. Selon l'invention, la cuisson s'effectue de préférence sous azote. Une cuisson sous atmosphère neutre, par exemple sous argon, est également possible si l'azote est apporté par les matières premières.

Le cycle de cuisson est de préférence effectué sous une pression d'azote voisine de 1 bar, mais une pression plus forte pourrait aussi convenir, et à une température comprise de préférence entre 1300°C et 1600°C.

Pendant la cuisson, l'azote réagit (« frittage réactif ») avec certains des constituants de la préforme, en particulier avec l'alumine calcinée et la silice sous forme micronique et les poudres métalliques, pour former la matrice et ainsi lier les grains du granulat.

La fixation d'azote dans la préforme en cours de cuisson entraîne une prise de poids de cette dernière. La prise de poids constitue un indicateur de la qualité de la cuisson pour un procédé de cuisson déterminé. A l'issue de l'étage de cuisson, on obtient un bloc fritté selon l'invention. En variante, et bien que cela puisse s'avérer délicat en pratique, le produit selon l'invention peut être mis en place dans sa position de service sans avoir été fritté, le frittage étant effectué *in situ.*

A la fin du frittage, on obtient un bloc fritté selon l'invention présentant une porosité ouverte réduite et des résistances à l'écrasement à froid et à la flexion à froid remarquables. Plus précisément, le produit présente une résistance à l'écrasement à froid supérieure ou égale à 50 MPa, voire supérieure à 100 MPa.

Sans être liés par une explication théorique, les inventeurs expliquent ces performances remarquables par une nitruration très homogène et permettant d'obtenir une teneur élevée en phase AlN15R et un matériau dépourvu de fissures.

L'homogénéité de la nitruration est illustrée par la faible teneur en métaux résiduels, en particulier en silicium. Cette teneur est en effet inférieure à 1,8 %, 1,5 %, voire inférieure à 1 %, en pourcentage massique sur la base du produit, même au coeur des blocs.

En outre, typiquement, la phase AlN15R, qui est une phase bien connue du type [4(AlN)](SiO₂), représente plus de 18 %, voire plus de 20% des phases cristallisées azotées de la matrice, en pourcentages massiques.

Le produit selon l'invention peut notamment être utilisé pour fabriquer des blocs, dont la forme n'est pas limitative. Ces blocs 10 peuvent en particulier comporter une surface extérieure 13 convexe, par exemple être parallélépipédique (figure 1 par exemple), ou comporter une surface extérieure 13 présentant des concavités modifiant sa forme générale. Un bloc 10 peut ainsi présenter des renfoncements 14 ou des canaux de passage 16 (figure 4) pour des gaz. Par exemple les blocs 10 peuvent être en forme de « X », de « U », de cylindre, ou de « + »,, comme représenté, par exemple, sur les figures 2, 3, 4 et 5, respectivement.

Quelle que soit leur forme générale, les blocs peuvent présenter localement des reliefs, des trous 15 ou des alvéoles, ouvertes ou fermées. Leur surface extérieure 13 peut être lisse (figures 1, 3 à 5) ou porter des corrugations 17 (figure 2), notamment afin d'augmenter la surface d'échange thermique.

Un produit selon l'invention peut également être utilisé pour fabriquer des produits minces 20, comme représenté sur la figure 6.

Sur les figures 1 et 6, l'épaisseur, la longueur et la largeur des blocs et du produit mince ont été référencées « e », « L » et « l », respectivement. La longueur hors tout transversale a été référencée « L' » sur les figures 2 à 5.

### Exemples

Les exemples suivants sont fournis à des fins illustratives et ne limitent aucunement l'invention.

Pour ces exemples, différents blocs ont été fabriqués suivant les étapes a) à f) du procédé décrit précédemment.

Pour les exemples du tableau 1, une charge de départ a été fabriquée par malaxage à sec des différents constituants ajoutés sous forme de poudres. L'eau a été ensuite progressivement ajoutée dans le malaxeur en fonctionnement afin d'obtenir un mélange d'une consistance adaptée pour le coulage dans le moule. Le moule était conformé à la fabrication de blocs de dimensions 300mm x 300mm x 250mm. Après coulage de la charge de départ dans le moule, une étape de vibration a été réalisée au moyen d'une aiguille vibrante du type génie civil pendant une durée comprise entre 1 et 5 minutes.

Le moule a ensuite été recouvert d'une bâche afin de limiter le séchage superficiel, puis immédiatement placé en étuve à une température d'environ 40 à 60°C, pendant une durée d'environ 10 heures afin de faciliter le durcissement du produit. Le bloc a ensuite été démoulé puis soumis à un séchage à 110°C sous air de manière à ce que l'humidité résiduelle soit inférieure à 0,5 %. Enfin, le bloc séché a subi une cuisson sous azote à 1500°C pendant au moins 10 heures.

Les matières suivantes ont été mises en oeuvre :
- mélange de grains de corindon brun électrofondu commercialisé par la Société Alcan, moins de 20 % des grains, en masse, présentant une taille comprise entre 7 et 15 mm, 60 %, en masse, présentant une taille comprise entre 0,2 et 7 mm, et 20 %, en masse, présentant une taille inférieure à 0,2 mm.
- poudre de carbure de silicium (SiC) présentant sensiblement la distribution granulométrique suivante, en pourcentages massiques :
   - 2-5 mm : 25 %
   - 0,2-2 mm : 50 %
   - 0-0,2 mm : 25 %.
- fumée de silice du type 983 U, commercialisée par la Société Elkem ;
- poudre d'alumine calcinée AC 44B4 présentant une taille médiane d'environ 4 microns, commercialisée par la Société Alcan,
- HMPNa (hexametaphosphate de soude) en poudre, commercialisé par la Société Rhodia,
- FFB32, qui est un phosphate d'aluminium acide du commerce, vendu par la société Budenheim,
- E452, qui est un additif alimentaire de type polyphosphate de calcium fourni par la société Brenntag,
- ciment à base d'aluminate de chaux CA 270, commercialisé par la Société Alcoa.

La porosité ouverte et la masse volumique apparente ont été mesurées selon la norme ISO 5017.

Les mesures de résistance mécanique à l'écrasement à froid ont été réalisées sur des éprouvettes cylindriques de 50 mm de diamètre et 50 mm de hauteur taillées à coeur des blocs, selon la norme NFB 40322.

Les phases cristallisées ont été mesurées par diffraction aux rayons X.

Les teneurs en azote (N) dans les produits ont été mesurées au moyen d'analyseurs de type LECO (LECO TC 436DR ; LECO CS 300). Les valeurs sont fournies en pourcentages massiques.

Les teneurs en phosphore ont été classiquement mesurées par fluorescence X.

Le tableau 1 suivant résume les essais effectués et les résultats obtenus.

**Tableau 1 :**

| | A | 1 | 2 | 3 | 4 |
|---|---|---|---|---|---|
| **Charge de départ sèche (en pourcentages massiques sur la base de la matière minérale sèche)** | | | | | |
| Granulat : Mélange de grains de corindon brun électrofondu | 80 | 80 | 80 | 80 | |
| Granulat : Mélange de grains de carbure de silicium | | | | | 80 |
| Fumée de Silice | 9 | 9 | 9 | 9 | 9 |
| Poudre d'alumine calcinée (D50 # 4µm) | 2 | 2 | 2 | 2 | 2 |
| Silicium métal (<200 microns) | 1 | 1 | 1 | 1 | 1 |
| Aluminium métal (<200 microns) | 8 | 8 | 8 | 8 | 8 |
| Total poudres de nature minérale | 100 | 100 | 100 | 100 | 100 |
| Ajout à base de phosphate type HMPNa | | +0,2 | | | +0,2 |
| FFB32 | | | +0,2 | | |
| E452 (polyphosphate calcique) | | | | +0,3 | |
| Ciment à base d'aluminate de CaO CA270 | +0,5 | +0,5 | +0,5 | +0,5 | +0,5 |
| Eau | +3,4 | +3,5 | +3,6 | +3,5 | +4,5 |

| **Composition élémentaire du produit final à coeur (en pourcentages massiques)** | | | | | |
|---|---|---|---|---|---|
| Carbone (%) | <1,0 | <1,0 | <1,0 | <1,0 | 22,9 |
| Aluminium (%) | 48,4 | 47,7 | 47,5 | 46,9 | 8,6 |
| Azote (%) | 3,0 | 4,0 | 4,2 | 4,2 | 4,5 |
| Silicium (%) | 5,0 | 5,0 | 5,1 | 5,3 | 58,5 |
| Oxygène (%) | 42,1 | 41,7 | 41,5 | 42,0 | 5,2 |
| Phosphore (%) | <0,02 | 0,07 | 0,06 | 0,07 | 0,07 |
| Impuretés (%) | ≈ 1,5 | ≈1,5 | ≈ 1,5 | ≈ 1,5 | ≈ 0,3 |

| **Analyse quantitative par diffraction X à coeur (en pourcentages massiques)** | | | | | |
|---|---|---|---|---|---|
| Corindon alpha (%) | 86 | 79,3 | 79,5 | 78,4 | 4,8 |
| SiC (%) | ND | ND | ND | ND | 75 |
| β'SiAlON (%) | 10 | 16 | 16 | 16 | 15 |
| AlN15R (%) | 2 | 4 | 5 | 6 | 5 |
| Silicium résiduel (%) | 2 | <1 | <1 | <1 | <1 |

| **Caractéristiques mesurées à coeur** | | | | | |
|---|---|---|---|---|---|
| Masse volumique apparente | 3,05 | 3,20 | 3,15 | 3,16 | 2,60 |
| Porosité ouverte (%) | 25 | 15 | 15,5 | 15,4 | 16 |
| Résistance à l'écrasement à froid (Mpa) | 30 | 120 | 115 | 117 | 130 |
| Structure interne | Fissures | - | - | - | - |

| **Analyse de la partie azotée cristallisée** | | | | | |
|---|---|---|---|---|---|
| AlN15R / (AlN15R + β'SiAlON) (%) | 16,6 | 20 | 23,8 | 27,3 | 25 |
| Teneur en P (% de la partie azotée cristallisée) | <0,2 | 0,43 | 0,37 | 0,44 | 0,47 |

| | | | | | |
|---|---|---|---|---|---|
| ND : non détectable - : Pas de fissure détectée | | | | | |

Le tableau 1 montre que, quelle que soit la forme sous laquelle le phosphore est introduit, les produits selon l'invention présentent une résistance à l'écrasement à froid tout à fait remarquable, les résistances mesurées étant environ quatre fois supérieures à celles mesurées sur le produit de l'exemple comparatif A.

Par ailleurs, les exemples selon l'invention présentent une teneur en azote et en β'SiAlON significativement supérieures à celles de l'exemple comparatif.

Les exemples selon l'invention présentent également, à coeur, une teneur en silicium résiduel non détectable tandis que la phase AIN15R représente plus de 18%, voire plus de 20%, et même plus de 25%, en pourcentages massiques, de la somme des phases AlN15R et β'SiAlON de la matrice.

Les produits selon l'invention peuvent présenter une teneur massique en azote supérieure de plus de 20%, voire de plus de 30%, à celle d'un produit obtenu dans les mêmes conditions et présentant la même composition sauf en ce qui concerne la teneur en phosphore, qui est inférieure à 0,2%, la différence entre les teneurs en phosphore étant compensée par du silicium et/ou de l'aluminium. La qualité de la nitruration est donc remarquable.

Enfin, contrairement à l'exemple comparatif, aucun des exemples selon l'invention ne présente de fissures.

Les produits selon l'invention sont ainsi tout à fait appropriés pour les applications envisagées. L'exemple 1 constitue un mode de réalisation préféré de l'invention.

Bien entendu, l'invention n'est pas limitée aux modes de réalisation décrits, fournis à titre illustratif et non limitatif.

En particulier, un produit selon l'invention peut servir dans d'autres applications que les hauts-fourneaux, par exemple comme revêtement d'un four servant à la fusion de métaux.

## Revendications

1. Produit réfractaire fritté comportant un granulat réfractaire lié par une matrice obtenue par frittage réactif, ledit produit comportant une partie cristallisée azotée comportant une phase SiAION de formule SiₓAl_{y}OᵤNᵥ, dans laquelle
- x est supérieur à 0 et inférieur ou égal à 1 ;
- y est supérieur à 0 et inférieur ou égal à 1 ;
- u est supérieur à 0 et inférieur ou égal à 1 ;
- v est supérieur à 0 et inférieur ou égal à 1 ;
le produit présentant une teneur en phosphore supérieure à 0,2%, en pourcentage en masse sur la base de ladite partie cristallisée azotée.

2. Produit selon la revendication précédente, présentant une teneur en phosphore supérieure à 0,3%, en pourcentage en masse sur la base de ladite partie cristallisée azotée.

3. Produit selon la revendication précédente, présentant une teneur en phosphore supérieure à 0,4%, en pourcentage en masse sur la base de ladite partie cristallisée azotée.

4. Produit selon l'une quelconque des revendications précédentes, présentant une teneur en phosphore inférieure à 2,5%, en pourcentage en masse sur la base de ladite partie cristallisée azotée.

5. Produit selon la revendication précédente, présentant une teneur en phosphore inférieure à 1 %, en pourcentage en masse sur la base de ladite partie cristallisée azotée.

6. Produit selon la revendication précédente, dans lequel la partie cristallisée azotée représente au moins 90% de la masse de la matrice.

7. Produit selon l'une quelconque des revendications précédentes, comportant une phase de formule Si_{6-zA}l_{z}O_{z}N_{8-z}, avec 0<z<4,2, ou « β'SiAlON ».

8. Produit selon la revendication précédente, dans lequel z > 1.

9. Produit selon la revendication précédente, dans lequel z > 3.

10. Produit selon l'une quelconque des revendications 7 à 9, dans lequel la phase β'SiAlON représente plus de 60 % de la masse de la partie cristallisée azotée.

11. Produit selon l'une quelconque des revendications précédentes, comportant une phase AlN15R, la phase AlN15R représentant plus de 18% de la masse de la partie cristallisée azotée,

12. Produit selon l'une quelconque des revendications précédentes, dans lequel la teneur en silicium résiduel est inférieure à 1,8 %, en pourcentage massique sur la base du produit.

13. Produit selon l'une quelconque des revendications précédentes, dans lequel
x ≥ 0,01 et/ou y > 0,01 et/ou u ≥ 0,01 et/ou v > 0,01.

14. Produit selon l'une quelconque des revendications précédentes, dans lequel
x ≥ 0,2 et/ou y > 0,14 et/ou u ≥ 0,14 et/ou v > 0,3.

15. Bloc réfractaire constitué d'une première partie et d'une deuxième partie, la première partie étant constituée par la masse de l'ensemble des grains présentant une taille supérieure à 200 µm et la deuxième partie liant les grains de la première partie, ledit bloc présentant au moins une dimension hors tout d'au moins 120 mm et comportant au moins une partie en un produit fritté conforme à l'une quelconque des revendications précédentes, la teneur en métaux résiduels étant inférieure à 1,8%, en pourcentage massigue sur la base du produit.

16. Dispositif choisi parmi un four et un échangeur thermique, **caractérisé en ce qu'**il comporte un revêtement au moins en partie en un produit réfractaire fritté selon l'une quelconque des revendications 1 à 14 ou constitué par un tel produit.

17. Mélange particulaire comportant une source de phosphore, une source de silicium, une source d'aluminium et une source d'oxygène, voire une source d'azote, dans des proportions et sous une forme adaptées pour former, par frittage réactif sous azote ou par frittage sous atmosphère non-oxydante si de l'azote est présent en quantité suffisante dans le mélange particulaire, une matrice d'un produit réfractaire fritté selon l'une quelconque des revendications 1 à 14.

## Patentansprüche

1. Feuerfestes Sinterprodukt, umfassend ein feuerfestes Granulat, das durch eine durch reaktives Sintern erhaltene Matrix gebunden ist, wobei das Produkt einen stickstoffhaltigen kristallisierten Teil umfasst, der eine SiAlON-Phase der Formel SiₓAl_{y}OᵤNᵥ umfasst, wobei
- x ist größer als 0 und kleiner oder gleich 1;
- y ist größer als 0 und kleiner oder gleich 1;
- u ist größer als 0 und kleiner oder gleich 1;
- v ist größer als 0 und kleiner oder gleich 1;
wobei das Produkt einen Phosphorgehalt von mehr als 0,2 %, in Gewichtsprozent bezogen auf den stickstoffhaltigen kristallisierten Anteil, aufweist.

2. Produkt nach dem vorangehenden Anspruch, mit einem Phosphorgehalt von mehr als 0,3 %, in Gewichtsprozent bezogen auf den stickstoffhaltigen kristallisierten Anteil.

3. Produkt nach dem vorangehenden Anspruch, mit einem Phosphorgehalt von mehr als 0,4 %, in Gewichtsprozent bezogen auf den stickstoffhaltigen kristallisierten Anteil.

4. Produkt nach einem der vorangehenden Ansprüche, mit einem Phosphorgehalt von weniger als 2,5 %, in Gewichtsprozent bezogen auf den stickstoffhaltigen kristallisierten Anteil.

5. Produkt nach dem vorangehenden Anspruch, mit einem Phosphorgehalt von weniger als 1 %, in Gewichtsprozent bezogen auf den stickstoffhaltigen kristallisierten Anteil.

6. Produkt nach dem vorangehenden Anspruch, wobei der stickstoffhaltige kristallisierte Anteil mindestens 90 % des Gewichts der Matrix ausmacht.

7. Produkt nach einem der vorangehenden Ansprüche, umfassend eine Phase der Formel Si_{6-z}Al_{z}O_{z}N_{8-z}, mit 0<z<4,2 oder "β'SiAlON".

8. Produkt nach dem vorangehenden Anspruch, wobei z > 1 ist.

9. Produkt nach dem vorangehenden Anspruch, wobei z > 3 ist.

10. Produkt nach einem der Ansprüche 7 bis 9, wobei die β'SiAlON-Phase mehr als 60 % des Gewichts des stickstoffhaltigen kristallisierten Anteils ausmacht.

11. Produkt nach einem der vorangehenden Ansprüche, umfassend eine AlN15R-Phase, wobei die AlN15R-Phase mehr als 18 % des Gewichts des stickstoffhaltigen kristallisierten Anteils ausmacht.

12. Produkt nach einem der vorangehenden Ansprüche, wobei der Restgehalt an Silizium weniger als 1,8 %, in Gewichtsprozent bezogen auf das Produkt, beträgt.

13. Produkt nach einem der vorangehenden Ansprüche, wobei x ≥ 0,01 und/oder y > 0,01 und/oder u > 0,01 und/oder v > 0,01.

14. Produkt nach einem der vorangehenden Ansprüche, wobei x ≥ 0,2 und/oder y > 0,14 und/oder u > 0,14 und/oder v > 0,3.

15. Feuerfester Block, bestehend aus einem ersten Anteil und einem zweiten Anteil, wobei der erste Anteil aus dem Gewicht aller Körner mit einer Größe von mehr als 200 µm besteht und der zweite Anteil die Körner des ersten Teils bindet, wobei der Block mindestens eine Gesamtabmessung von mindestens 120 mm aufweist und mindestens einen Anteil eines gesinterten Produkts umfasst, das einem der vorangehenden Ansprüche entspricht, wobei der Restmetallgehalt weniger als 1,8 %, in Gewichtsprozenz bezogen auf das Produkt, beträgt.

16. Vorrichtung, ausgewählt aus einem Ofen und einem Wärmetauscher, **dadurch gekennzeichnet, dass** sie eine mindestens teilweise Beschichtung aus einem gesinterten feuerfesten Produkt nach einem der Ansprüche 1 bis 14 umfasst oder aus einem solchen Produkt besteht.

17. Teilchenmischung, umfassend eine Phosphorquelle, eine Siliziumquelle, eine Aluminiumquelle und eine Sauerstoffquelle oder auch eine Stickstoffquelle, in Anteilen und in einer Form, die geeignet ist, durch reaktives Sintern unter Stickstoff oder durch Sintern in nicht-oxidierender Atmosphäre, wenn genügend Stickstoff in der Teilchenmischung vorhanden ist, eine Matrix aus einem gesinterten feuerfesten Produkt nach einem der Ansprüche 1 bis 14 zu bilden.

## Claims

1. A sintered refractory product comprising a refractory granulate bonded by a matrix obtained by reactive sintering, said product comprising a crystalline nitrogen-containing portion comprising a SiAlON phase with formula SiₓAl_{y}OᵤNᵥ, wherein
• x is greater than 0 and less than or equal to 1;
• y is greater than 0 and less than or equal to 1;
• u is greater than 0 and less than or equal to 1;
• v is greater than 0 and less than or equal to 1;
the product having a phosphorus content of more than 0.2%, as a percentage by weight on the basis of said crystalline nitrogen-containing portion.

2. The product as claimed in the preceding claim, having a phosphorus content of more than 0.3%, as a percentage by weight on the basis of said crystalline nitrogen-containing portion.

3. The product as claimed in the preceding claim, having a phosphorus content of more than 0.4%, as a percentage by weight on the basis of said crystalline nitrogen-containing portion.

4. The product as claimed in any preceding claim, having a phosphorus content of less than 2.5%, as a percentage by weight on the basis of said crystalline nitrogen-containing portion.

5. The product as claimed in the preceding claim, having a phosphorus content of less than 1%, as a percentage by weight on the basis of said crystalline nitrogen-containing portion.

6. The product as claimed in the preceding claim, wherein the crystalline nitrogen-containing portion represents at least 95% of the mass of the matrix.

7. The product as claimed in any preceding claim, comprising a phase with formula Si_{6-z}Al_{z}O_{z}N_{8-z}, where 0 < z < 4.2, or "β'SiAlON".

8. The product as claimed in the preceding claim, wherein z > 1.

9. The product as claimed in the preceding claim, wherein z > 3.

10. The product as claimed in any one of claims 7 to 9, wherein the β'SiAlON phase represents more than 60% of the mass of the crystalline nitrogen-containing portion.

11. The product as claimed in any preceding claim, comprising a AlN15R phase, wherein the AlN15R phase represents more than 18% of the mass of the crystalline nitrogen-containing portion.

12. The product as claimed in any preceding claim, wherein the residual silicon content is less than 1.8%, as a percentage by weight on the basis of the product.

13. The product as claimed in any preceding claim, wherein x ≥ 0.01 and/or y > 0.01 and/or u ≥ 0.01 and/or v > 0.01.

14. The product as claimed in any preceding claim, wherein x ≥ 0.2 and/or y > 0.14 and/or u ≥ 0.14 and/or v > 0.3.

15. A refractory block constituted by a first portion and a second portion, the first portion being constituted by the mass of the set of grains with a size greater than 200 µm and the second portion binding the grains of the first portion, said block having at least one overall dimension of at least 120 mm and comprising at least one portion formed from a sintered portion according to any one of the preceding claims, the content of residual metals being less than 1.8%, as a percentage by weight on the basis of the product.

16. A device selected from a furnace and a heat exchanger, wherein it comprises a lining formed at least partially from a sintered refractory product as claimed in any one of claims 1 to 14 or constituted by said product.

17. Particulate mixture comprising a source of phosphorus, a source of silicon, a source of aluminum, and a source of oxygen, and possibly a source of nitrogen, in proportions and forms which are adapted to obtain, by reactive-sintering in a nitrogen atmosphere or by sintering in a non-oxidizing atmosphere if a sufficient quantity of nitrogen is supplied in the particulate mixture, a matrix of a sintered refractory product according to any one of claims 1 to 14.
